# EUROPEAN PATENT SPECIFICATION

(11) **EP 2 248 714 B1**
(45) Date of publication and mention of the grant of the patent: **25.01.2012**
(21) Application number: 09157734.6
(22) Date of filing: 09.04.2009
(51) Int. Cl.: B62J 1/08, B62K 19/36, B62K 25/02, F16B 2/18

(54) **Quick Release Device for Bicycle**
Schnelllösevorrichtung für Fahrrad
Dispositif à libération rapide pour bicyclette

(43) Date of publication of application: 10.11.2010
(73) Proprietor: Lin, Chang Hui, Province of China (TW)
(72) Inventor: Lin, Chang Hui, Province of China (TW)
(74) Representative: Beck & Rössig European Patent Attorneys

(56) References cited:
- DE-U1- 29 609 092
- GB-A- 1 563 433
- US-A- 5 556 222
- US-B1- 6 948 878

## Description

The invention relates to a quick release device of the type as defined in the preamble portion of claim 1.

Typical quick release mechanisms comprise a tie rod engaged between two movable ears, and a handle or lever arm having a cam coupled to the tie rod.

Quick release devices of this type are known from US 6,948,878 B1 and DE 296 09 092 U1. Further quick release devices are known from US 5,556,222 A and GB 1 563 433 A.

However, the handles or lever arms are made of solid metal material and are thus heavy in weight and expensive.

In order to solve the afore-mentioned problem the invention provides a quick release device according to claim 1. Advantageous embodiments are laid down in further claims.

The quick release device includes an attaching member having a chamber for receiving various objects and having two ears. An aperture extends through the ears for receiving a tie rod. A longitudinal lever arm includes a bore for reducing the weight of the lever arm and a cam for engaging with one of the ears. The longitudinal lever arm further includes a channel for forming two limbs, and an orifice formed in the limbs for receiving a shaft. A free end of the tie rod is secured to the shaft for securing or releasing the ear. The lever arm includes a bore communicating with the channel of the cam and formed through the lever arm in longitudinal direction. The first end of the lever arm includes a smaller outer diameter than that of the second end of the lever arm. The lever arm has a high strength and but little weight. Moreover, in can be manufactured at low costs.
FIG. 1 is a perspective view illustrating a portion of a quick release device according to an embodiment of the invention;
FIG. 2 is a perspective view of a lever arm of the quick release device; and
FIG. 3 is a cross sectional view of the lever arm of the quick release device taken along lines 3-3 of FIG. 2.

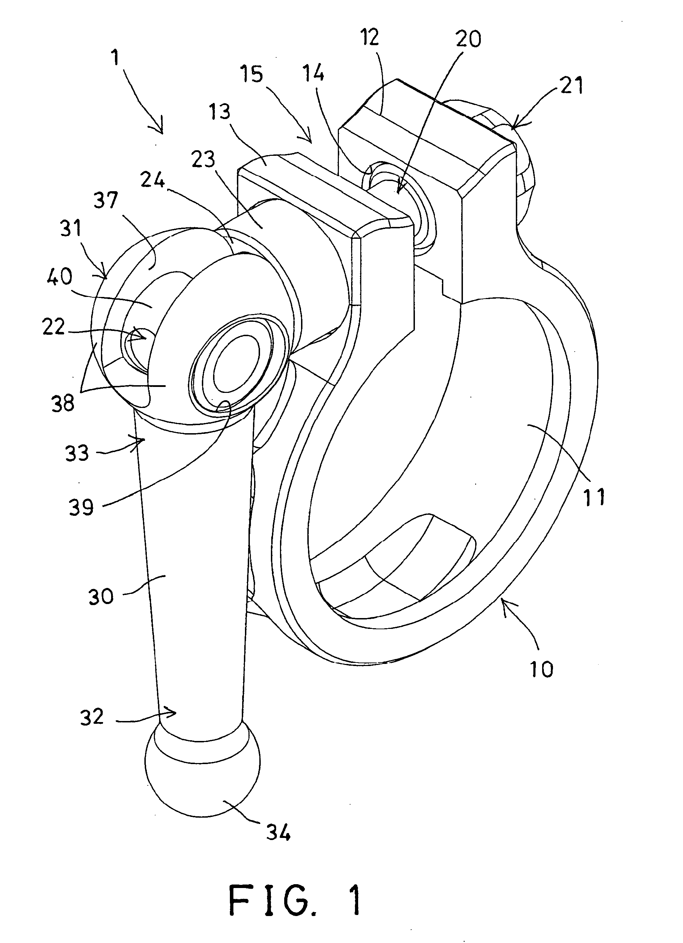

Referring to FIG. 1, a quick release device 1 comprises a C-shaped attaching member 10 including a chamber 11 for receiving handlebars, seat posts, wheel hubs, or other objects (not shown), a slot 15 formed between two ears 12, 13, and an aperture 14 formed through the ears 12, 13 for receiving a tie rod 20 which includes a head 21 for engaging with one of the ears 12 and which includes an outer or free end 22 extended out of the other ear 13, and a wear-resist cam seat 23 attached to the end 22 of the tie rod 20 and contacted with the other ear 13, the cam seat 23 includes a curved recess 24 faced away from the other ear 13. A lever arm 30 includes a cam 31 provided on one end 33 for attaching to the free end 22 of the tie rod 20 and for engaging with the curved recess 24 of the cam seat 23.

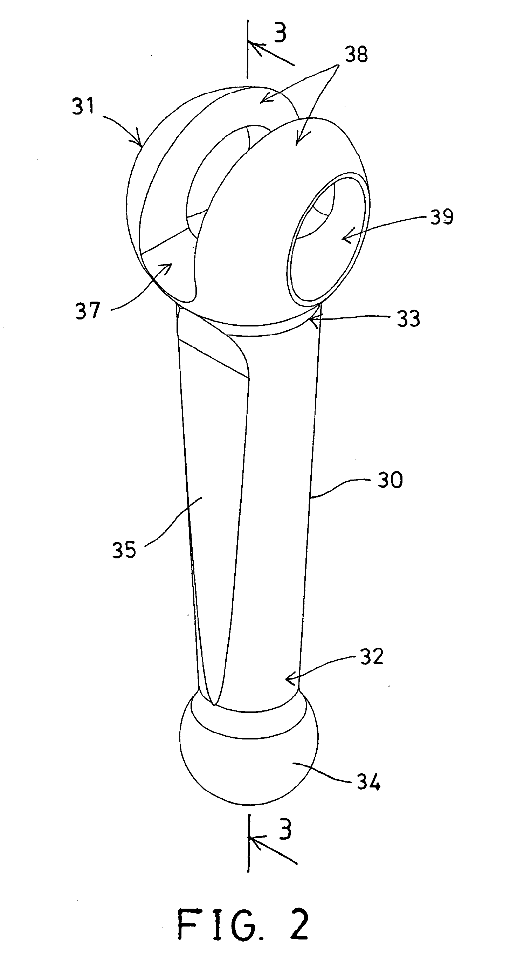

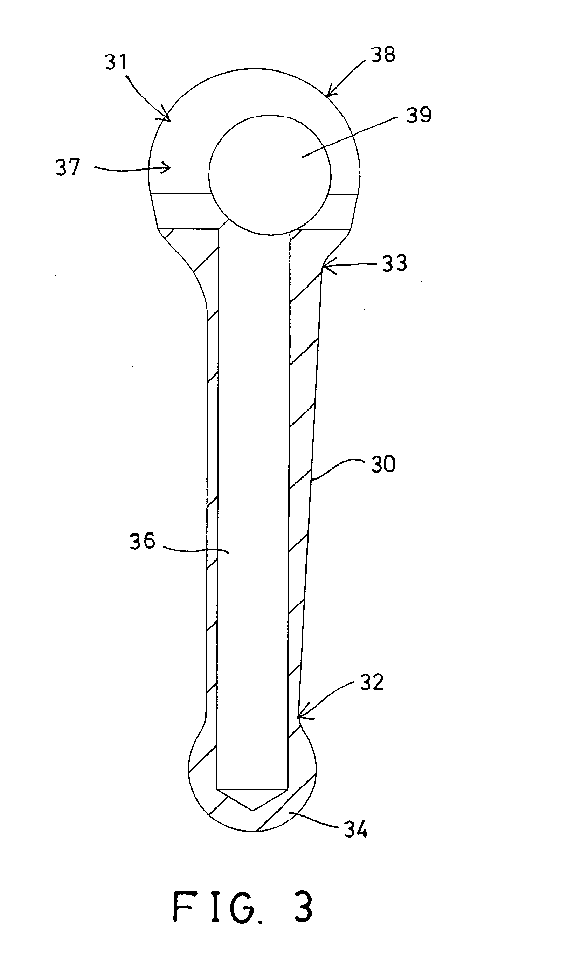

The longitudinal lever arm 30 includes a circular cross section, or includes a cylindrical shape (FIGS. 1-3), and includes one or first end 32 having a smaller outer diameter than the other or second end 33, a hand grip 34 provided on the first end 32, one or more flat surfaces 35 (FIG. 2) formed on the outer peripheral portion, and includes a bore 36, such as a blind bore 36 (FIG. 3) formed through the lever arm 30, and includes the cam 31 provided on the other or second end 33. The lever arm 30 includes a channel 37 formed in the cam 31 and communicating with the bore 36 for forming two limbs 38 and for receiving the free end 22 of the tie rod 20, and includes an orifice 39 formed in the cam 31 and communicating with the channel 37 for receiving a shaft 40 (FIG. 1) which is perpendicular to the lever arm 30 and engaged through the orifice 39 of the limbs 38 and the channel 37 of the cam 31. The free end 22 of the tie rod 20 may be secured to the shaft 40 with latches or fasteners or threading engagements (not shown).

In operation, the lever arm 30 may be pulled to actuate the cam 31 to secure or disengage the ears 13 from the object. The lever arm 30 is longitudinal having a circular cross section, or having a cylindrical shape, and having a bore 36 (FIG. 3) formed through the lever arm 30, and having a smaller one or first end 32 for increasing the stiffness and the bending strength of the lever arm 30 and for reducing the weight and the costs of the lever arm 30.

## Claims

1. Quick release device comprising
an attaching member (10) including a chamber (11), a slot (15) formed between a first ear (12) and a second ear (13), an aperture (14) formed through the ears (12, 13),
a tie rod (20) engaged in the aperture (14) of the ears (12, 13) and including a head (21) engaged with the first ear (12) and including a free end (22),
a lever arm (30) including a first end (32) and a cam (31) formed on a second end (33) for engaging with the second ear (13), a channel (37) formed in the cam (31) for forming two limbs (38) and for receiving the free end (22) of the tie rod (20), an orifice (39) formed in the limbs (38), and
a shaft (40) received in the orifice (39) of the limbs (38) and extended through the channel (37) of the cam (31),
wherein the free end (22) of the tie rod (20) is secured to the shaft (40),
**characterised in that**
the lever arm (30) includes a bore (36) communicating with the channel (37) of the cam (31) and formed through the lever arm (30) in longitudinal direction, and
the first end (32) of the lever arm (30) includes a smaller outer diameter than that of the second end (33) of the lever arm (30).

2. Quick release device as claimed in claim 1, wherein the bore (36) of the lever arm (30) is a blind bore (36).

3. Quick release device as claimed in claim 1 or 2, wherein the lever arm (30) includes a hand grip (34) provided on the first end (32).

4. Quick release device as claimed in one of claims 1 to 3, wherein the lever arm (30) includes a circular-shaped cross section.

5. Quick release device as claimed in one of claims 1 to 4, wherein the lever arm (30) includes a cylindrical shape.

6. Quick release device as claimed in one of claims 1 to 5, wherein the lever arm (30) includes at least one flat surface (35) formed on an outer portion.

7. Quick release device as claimed in one of claims 1 to 6, wherein a cam seat (23) is attached onto the free end (22) of the tie rod (20) and engaged with the second ear (13), and includes a curved recess (24) for engaging with the cam (31).

## Patentansprüche

1. Schnellspannvorrichtung, umfassend
ein Befestigungselement (10), das einen Raum (11) aufweist, einen Spalt (15), der zwischen einem ersten Ohr (12) und einem zweiten Ohr (13) ausgebildet ist, wobei in den Ohren (12, 13) jeweils eine Öffnung (14) geformt ist,
eine Verbindungsstange (20), die in die Öffnung (14) der Ohren (12, 13) eingesetzt ist und ein freies Ende (22) sowie einen Kopf (21) aufweist, der in das erste Ohr (12) eingesetzt ist,
einen Hebelarm (30) mit einem ersten Ende (32) und einem Nocken (31), der an einem zweiten Ende (33) ausgebildet ist und mit dem zweiten Ohr (13) in Eingriff kommen kann, wobei in dem Nocken (31) ein Kanal (37) geformt ist, so dass zwei Glieder (38) entstehen, die das freie Ende (22) der Verbindungsstang (20) aufnehmen können, und wobei in den Gliedern (38) eine Öffnung (39) ausgebildet ist, und
einen Schaft (40), der in die Öffnung (39) der Glieder (38) eingesetzt ist und sich durch den Kanal (37) des Nockens (31) erstreckt,
wobei das freie Ende (22) der Verbindungsstange (20) an dem Schaft (40) gesichert ist,
**dadurch gekennzeichnet, dass**
der Hebelarm (30) eine Bohrung (36) aufweist, die mit dem Kanal (37) des Nockens (31) in Verbindung steht und sich in Längsrichtung durch den Hebelarm (30) erstreckt, und das erste Ende (32) des Hebelarms (30) einen geringeren Außendurchmesser als das zweite Ende (33) des Hebelarms (30) aufweist.

2. Schnellspannvornchtung nach Anspruch 1, wobei die Bohrung (36) des Hebelarms (30) eine Sacklochborhung (36) ist.

3. Schnellspannvornchtung nach Anspruch 1 oder 2, wobei der Hebelarm (30) einen Handgriff (34) aufweist, der an dem ersten Ende (32) bereitgestellt ist.

4. Schnellspannvornchtung nach einem der Ansprüche 1 bis 3, wobei der Hebelarm (30) einen runden Querschnitt aufweist.

5. Schnellspannvornchtung nach einem der Ansprüche 1 bis 4, wobei der Hebelarm (30) eine zylindrische Form aufweist.

6. Schnellspannvornchtung nach einem der Ansprüche 1 bis 5, wobei der Hebelarm (30) mindestens eine abgeflachte Oberfläche (35) an einem äußeren Teil aufweist.

7. Schnellspannvornchtung nach einem der Ansprüche 1 bis 6, wobei an dem freien Ende (22) der Verbindungsstange (20) ein Nockensitz (23) befestigt ist, der mit dem zweiten Ohr (13) in Verbindung steht und eine gewölbte Aussparung (24) aufweist, in die der Nocken (31) eingesetzt werden kann.

## Revendications

1. Dispositif à déclenchement instantané comprenant
un organe de fixation (10) comprenant une chambre (11), une fente (15) formée entre une première oreille (12) et une seconde oreille (13), une ouverture (14) formée à travers les oreilles (12, 13),
une tige de traction (20) engrenée dans l'ouverture (14) des oreilles (12, 13) et comprenant une tête (21) engrenée avec la première oreille (12) et comprenant une première extrémité libre (22),
un bras de levier (30) comprenant une première extrémité (32) et une came (31) formée sur une seconde extrémité (33) pour s'engrener avec la seconde oreille (13), un canal (37) formé dans la saillie (31) pour former deux membres (38) et pour recevoir l'extrémité libre (22) de la tige de traction (20), un orifice (39) formé dans les membres (38) et
un arbre (40) logé dans l'orifice (39) des membres (38) et qui s'étend à travers le canal (37) de la saillie (31),
dans lequel l'extrémité libre (22) de la tige de traction (30) est fixée à l'arbre (40),
**caractérisé en ce**
**que** le bras de levier (30) comprend une forure (36) qui communique avec le canal (37) de la saillie (31) et qui est formée à travers le bras de levier (30) dans le sens longitudinal et la première extrémité (32) du bras de levier (30) comprend un diamètre extérieur plus petit que celui de la seconde extrémité (33) du bras de levier (30).

2. Dispositif à déclenchement instantané selon la revendication 1 dans lequel la forure (36) du bras de levier (30) est un trou borgne (36).

3. Dispositif à déclenchement instantané selon la revendication 1 ou 2 dans lequel le bras de levier (30) comprend une poignée (34) prévue sur la première extrémité (32).

4. Dispositif à déclenchement instantané selon l'une des revendications 1 à 3 dans lequel le bras de levier (30) comprend une section transversale de forme circulaire.

5. Dispositif à déclenchement instantané selon l'une des revendications 1 à 4 dans lequel le bras de levier (30) comprend une forme cylindrique.

6. Dispositif à déclenchement instantané selon l'une des revendications 1 à 5 dans lequel le bras de levier (30) comprend au moins une surface plate (35) formée sur une portion extérieure.

7. Dispositif à déclenchement instantané selon l'une des revendications 1 à 6 dans lequel une embase de saillie (23) est attachée sur l'extrémité libre (22) de la tige de traction (20) et engrenée avec la seconde oreille (13) et comprend un évidement courbé (24) pour s'engrener avec la saillie (31).
